# EUROPÄISCHE PATENTANMELDUNG

(11) **EP 2 342 969 A1**
(43) Veröffentlichungstag der Anmeldung: **13.07.2011**
(21) Anmeldenummer: 10000103.1
(22) Anmeldetag: 08.01.2010
(51) Int. Cl.: A01G 23/06

(54) **Gerät zur Bearbeitung eines Bodenbereichs**

(71) Anmelder: Tünnissen Spezialmaschinen GmbH, 47506 Neukirchen-Vluyn (DE)
(72) Erfinder: Tünnissen Spezialmaschinen GmbH, 47506 Neukirchen-Vluyn (DE)
(74) Vertreter: Schoenen, Norbert

(57) **Zusammenfassung**

Das Gerät zur Bearbeitung eines Bodenbereiches, insbesondere Baumstubbenfräse, mit einem angetriebenen Fräsrad, welches teilweise von einem Schutzgehäuse umgeben ist, ist dadurch gekennzeichnet, dass das Fräsrad (1) durch eine Anhebeeinrichtung anhebbar und von dem Schutzgehäuse (27) vollständig umschließbar ist, und dass bei Nichtbetätigen einer räumlich vom Fräsrad (1) getrennten Kontakteinheit (22) ein Kontakt unterbrochen wird und eine Steuereinrichtung das Anheben und vollständige Umschließen des Fräsrads (1) durch Kraftmittel (24, 26, 28) auslöst.

Als Zeichnung für die Zusammenfassung wird Figur 3 vorgeschlagen.

## Beschreibung

Die Erfindung betrifft ein Gerät nach dem Oberbegriff des Anspruchs 1.

Derartige Baumstubbenfräsen sind bekannt, beispielsweise aus der DE 93 00 531 U1. Üblicherweise befindet sich das Schutzgehäuse nur im oberen Bereich des Fräsrades.

Im Betrieb dreht sich das Fräsrad einer Stubbenfräse mit hoher Geschwindigkeit und zerkleinert dabei den beim Fällen eines Baumes verbleibenden Stumpf. Währenddessen befindet sich das Bedienungspersonal an einem Bedienpult mit einer Kontakteinheit, welches in ausreichend sicherer Entfernung vom Fräsrad angeordnet ist. Beim Verlassen der Kontakteinheit schaltet das Gerät ab und das Fräsrad wird nicht mehr angetrieben. Aus Sicherheitsgründen (Arbeitsschutz) wäre es vorteilhaft, wenn innerhalb einer sehr kurzen Zeitdauer, z. B. 10 Sekunden, nach dem Abschalten des Gerätes der Bereich um das Fräsrad herum völlig ungefährlich für das Bedienungspersonal und andere Personen ist.

Der Erfindung liegt daher die Aufgabe zu Grunde, bei dem Gerät zur Bearbeitung eines Bodenbereiches der eingangs genannten Art eine Möglichkeit zu schaffen, dass der Bereich um das Fräsrad herum innerhalb einer sehr kurzen Zeitdauer, insbesondere innerhalb von zehn Sekunden, nach dem Abschalten des Gerätes völlig ungefährlich ist.

Diese Aufgabe wird erfindungsgemäß durch die Merkmale des Anspruchs 1 gelöst.

Bei einer Arbeitsunterbrechung, wenn das Bedienungspersonal die Kontakteinheit verlässt, wird die Steuereinrichtung automatisch in Betrieb gesetzt und sorgt für das Anheben des Fräsrades und das Umschließen (Einkapseln) des Fräsrades, wobei der Freiraum zwischen dem Fräsrad und dem Boden bzw. Baumstumpf die Möglichkeit bietet, das Fräsrad auch im unteren Bereich vollständig zu umschließen. Das Fräsrad ist damit nicht mehr von außen ohne weiteres zugänglich. Vom Fräsrad wegfliegende Kleinteile können das Bedienungspersonal nicht verletzen. Das Bedienungspersonal kann auch nicht mit Körperteilen oder Bekleidungsstücken vom Fräsrad erfasst werden, so dass sowohl eine unmittelbare als auch eine mittelbare Verletzungsgefahr durch das Fräsrad ausgeschlossen ist.

Ein absolut sicherer Schutz wird erreicht, da das Fräsrad vollständig vom Schutzgehäuse umschließbar ist.

Wenn aus geometrischen Gründen der Vorschubweg des Antriebselements für das verschiebbare Schutzgehäuse begrenzt ist, ist es von Vorteil, wenn in einer weiteren erfindungsgemäßen Ausgestaltung das Schutzgehäuse mehrere, insbesondere zwei, ineinander verschiebbare Teilgehäuse umfasst. Das Antriebselement bewegt unmittelbar nur eines der Teilgehäuse, welches wiederum das andere Teilgehäuse bewegt, so dass auch bei einem kurzen Arbeitsweg des Antriebselementes das Fräsrad vollständig vom Schutzgehäuse umschlossen ist.

Vorzugsweise ist die Anhebeeinrichtung hydraulisch angetrieben, um nur eine kurze Zeitdauer zwischen dem Unterbrechen des Arbeitsablaufes und dem vollständigen Verschließen des Fräsrades zu ermöglichen. Aus dem gleichen Grunde ist das Schutzgehäuse vorzugsweise ebenfalls hydraulisch bewegbar. Möglich ist in beiden Fällen aber auch ein pneumatischer, elektrischer, mechanischer oder andersartiger Antrieb bzw. Stellmittel.

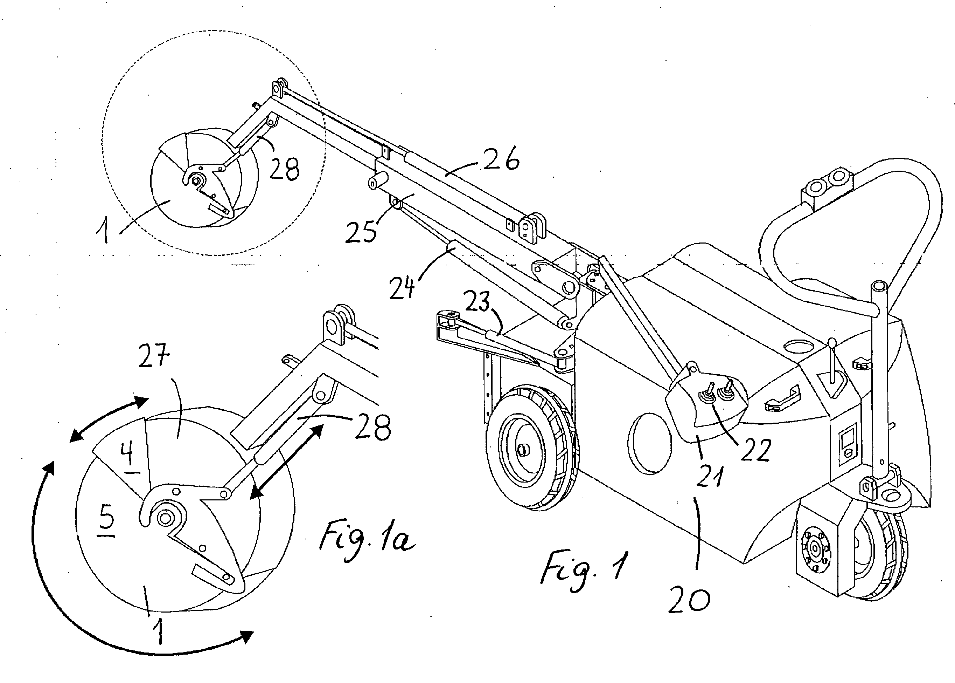

Für die Bedienungsperson ist es nicht möglich, sich von der Kontakteinheit zu entfernen und in die Nähe des Fräsrades zu kommen, ohne dass das Fräsrad vom Schutzgehäuse umschlossen ist. Die Kontakteinheit kann an einem Bedienpult vorgesehen sein, welches an dem Gerät angebracht ist (siehe Figur 1). Möglich ist aber auch eine vom Gerät unabhängige Kontakteinheit mit Fernbedienung (Infrarot, Funk oder anders).

Weiterhin ist es von Vorteil, wenn die Steuereinrichtung erst bei erneuter Betätigung der Kontakteinheit das Schutzgehäuse öffnet. Wenn beispielsweise das Fräsrad von der Zapfwelle einer Zugmaschine mechanisch angetrieben wird, läuft es auch beim Verlassen der Kontakteinheit weiter und kommt erst mit dem Abschalten der Zugmaschine bzw. dem Abkuppeln der Zapfwelle nach einer gewissen Zeit zum Stillstand. Durch das Umschließen des Fräsrades immer dann, wenn die Kontakteinheit nicht betätigt wird, wird gerade in einem solchen Fall eine besonders hohe Sicherheit im Sinne des Arbeitsschutzes erreicht.

In einigen Fällen ist es von Vorteil, wenn auch beim Arbeitsvorgang das Fräsrad teilweise vom Schutzgehäuse umschlossen ist, z. B. beim Arbeiten auf Friedhöfen, wobei ein Schutz vor vom Fräsrad weg geschleuderten Kleinteilen erreicht wird. Damit werden z. B. sich in der Nähe aufhaltende Friedhofsbesucher geschützt.

Zusätzlich wird vorgeschlagen, dass das Fräsrad einen Antrieb mit einer, insbesondere elektrisch, ansteuerbaren, insbesondere einer hydraulischen, Kupplung aufweist und eine Steuereinrichtung vorgesehen ist, die bei Arbeitsunterbrechung die Kupplung trennt. Alle Kupplungsarten, nämlich pneumatisch, hydraulisch, elektrisch, magnetisch oder andere sind möglich.

In einer weiteren Ausgestaltung der Erfindung kann auch sowohl ein Schutzgehäuse als auch eine ansteuerbare Kupplung vorgesehen sein, wobei beide Elemente bei Arbeitsunterbrechung automatisch betätigt werden. In diesem Fall wird ein besonders hoher Arbeitsschutz erreicht.

Im Folgenden wird ein Ausführungsbeispiel der Erfindung anhand von Zeichnungen näher beschrieben. Es zeigen
- Figur 1: eine schematische Übersichtszeichnung einer erfindungsgemäßen Baumstubbenfräse mit Kontakteinheit und Fräsrad,
- Figur 1a: ein Detail aus Figur 1,
- Figur 2: den Bereich um das Fräsrad des Gerätes nach Figur 1 im Arbeitsbetrieb und
- Figur 3: den Bereich um das Fräsrad entsprechend Figur 2 bei Arbeitsunterbrechung.

In allen Zeichnungen haben gleiche Bezugszeichen die gleiche Bedeutung und werden daher gegebenenfalls nur einmal erläutert.

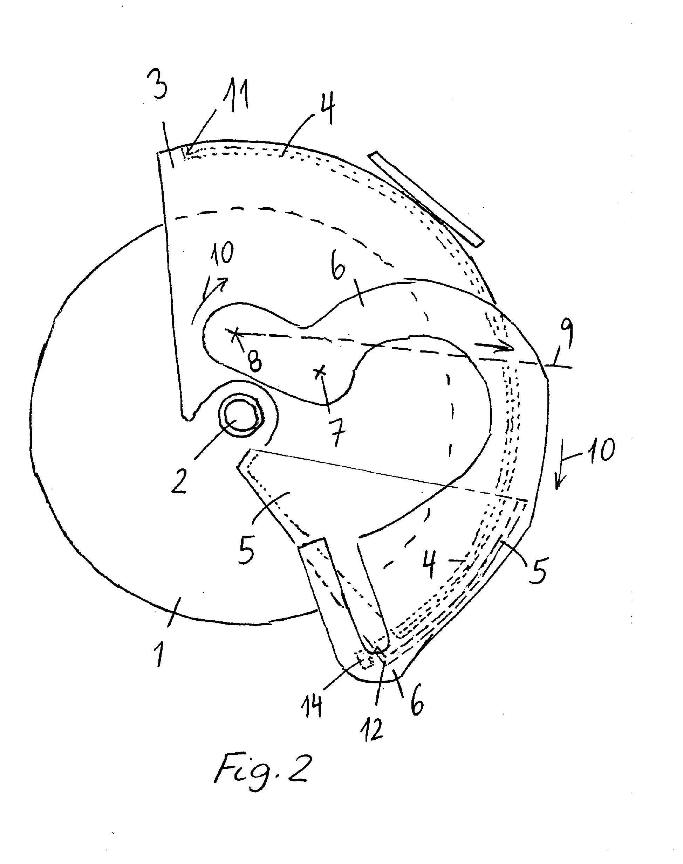

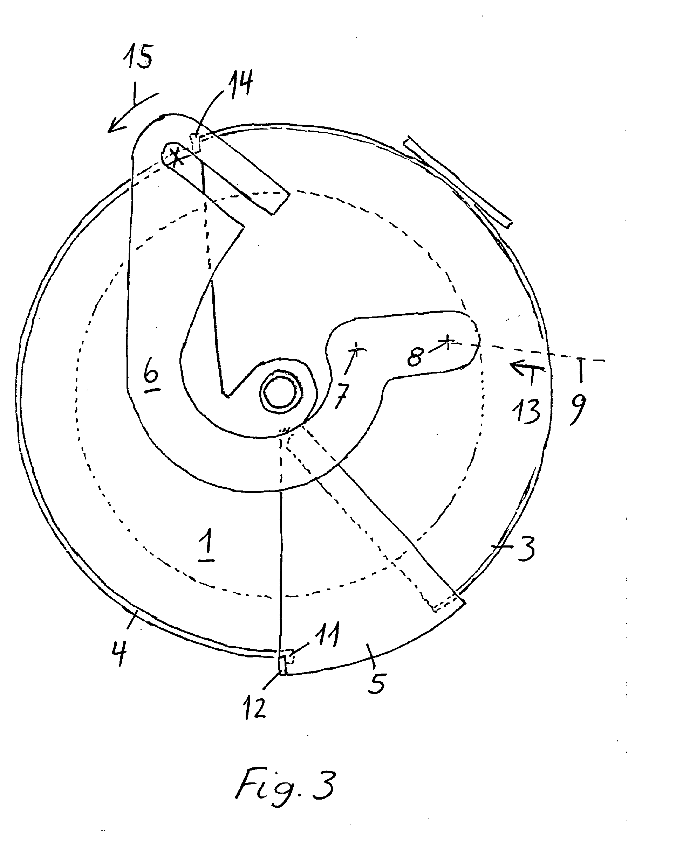

Die in Figur 1 dargestellte handgeführte Baumstubbenfräse weist in an sich bekannter Weise ein Fahrgestell 20 mit Fahrwerk und einem Bedienpult 21 mit Kontakteinheit 22 auf. Weiter hat die Baumstubbenfräse einen Maschinenarm 25, der um eine senkrechte Achse mittels eines Hydraulikzylinders 23 seitlich verschwenkbar und mittels eines weiteren Hydraulikzylinders 24 anheb- und absenkbar ist. Am Ende des Maschinenarm 25 ist das Fräsrad 1 angebracht. Das Fräsrad 1 lässt sich vom Hydraulikzylinder 26 auf und ab bewegen. Die beweglichen Teile 4, 5 des Schutzgehäuses 27 lassen sich von einem Hydraulikzylinder 28 bewegen, wie es weiter unten und in den Figuren 2 und 3 im Detail erläutert wird.

Figur 2 zeigt den Bereich um das Fräsrad 1 des erfindungsgemäßen Gerätes während des Betriebszustandes. Hier rotiert das Fräsrad 1 mit sehr hoher Geschwindigkeit um die Achse 2.

Der obere, vordere Bereich des Fräsrades 1 wird in an sich bekannter Weise durch den feststehenden Teil 3 des Schutzgehäuses abgedeckt. Die beweglichen Teile des Schutzgehäuses, nämlich der erste bewegliche Teil 4 und der zweite bewegliche Teil 5 sind in diesem Arbeitszustand in den sektoralen Bereich des feststehenden Schutzgehäuses 3 zurückgeschoben. Zur Bewegung der beweglichen Teile 4, 5 des Schutzgehäuses dient ein um die Achse 7 verschwenkbarer Schwenkarm 6. Am Punkt 8 des Schwenkarms 6 greift ein in den Figuren 2 und 3 nicht dargestellter Hydraulikzylinder an und übt eine Kraft in Richtung der gestrichelten Linie 9 auf den Schwenkarm 6 aus, wenn durch Verlassen der Kontakteinheit ein Kontakt unterbrochen wird.

In diesem Fall wird der Schwenkarm 6 in Richtung der Pfeile 10 um die Achse 7 verschwenkt. Das äußere Ende des Schwenkarms 6 greift an dem einen Ende des ersten beweglichen Teils 4 des Schutzgehäuses an und verschwenkt dieses in die gleiche Richtung, also im Uhrzeigersinn um das Fräsrad 1 herum. Das Verschließen gegen den Uhrzeigersinn liegt aber auch im Rahmen der Erfindung. Am anderen Ende des ersten beweglichen Teils 4 des Schutzgehäuses ist eine Schulter 11 angebracht, die sich auf die Schulter 12 des zweiten beweglichen Teils 5 des Schutzgehäuse während des Schwenkvorgangs zu bewegt und beim Anlegen an diese Schulter 12 den zweiten beweglichen Teil 5 ebenfalls im Uhrzeigersinn verschwenkt.

Am Ende der gesamten Schwenkbewegung ist ein Zustand entsprechend Figur 3 erreicht. Das Fräsrad 1 ist vollständig vom Schutzgehäuse, nämlich vom feststehenden Teil 3, vom ersten beweglichen Teil 4 und vom zweiten beweglichen Teil 5 umschlossen.

Beim Öffnen des Schutzgehäuses läuft der Vorgang wie folgt ab:
Der Hydraulikzylinder drückt in Richtung des Pfeils 13 entlang der Kraft Richtung 9 auf den Angriffspunkt 8 und
schwenkt auf diese Weise den Schwenkarm 6 in Richtung des Pfeils 15, also entgegen dem Uhrzeigersinn. Das Öffnen im Uhrzeigersinn liegt aber auch im Rahmen der Erfindung.
Dabei nimmt der Schwenkarm 6 den ersten beweglichen Teil 4 des Schutzgehäuses mit, der sich damit ebenfalls entgegen dem Uhrzeigersinn bewegt. Wenn die Schulter 14 des ersten beweglichen Teils 4 an die Schulter 12 des zweiten beweglichen Teils 5 anschlägt, nimmt der erste bewegliche Teil 4 den zweiten beweglichen Teil 5 mit, so dass sich beide Teile entgegen dem Uhrzeigersinn zurück in die Ausgangslage entsprechend Figur 2 bewegen, um das Fräsrad 1 wieder freizugeben für eine weitere Bearbeitung der Baumstubben.

Erfindungsgemäß wird nach einer Arbeitsunterbrechung also das Fräsrad zunächst automatisch angehoben, wobei diese Bewegung hydraulisch oder auf andere Weise z. B. mittels eines Ölmotors mit Kette, pneumatisch, elektrisch oder mechanisch erfolgen kann. Wenn das Fräsrad freigegeben ist, wird es - ebenfalls automatisch - durch das Schutzgehäuse vollständig verschlossen. Der bewegliche Teil des Schutzgehäuses kann dabei in einteiliger oder auch in geteilter Ausführung vorliegen. Das automatische Anheben als erster Schritt nach dem Unterbrechen des Arbeitsvorganges dient dazu, das Fräsrad vom Arbeitsmaterial freizustellen, um auch den unteren Bereich des Fräsrades vom Schutzgehäuse umschließen zu können.

Das Fräsrad selber kann mechanisch, nämlich über eine Zapfwelle und/oder Gelenkwelle angetrieben sein. Alternativ kann das Fräsrad auch über eine hydraulische, pneumatische, elektrische oder mechanische mit Hilfe der Steuereinrichtung trennbare Kupplung angetrieben sein.

### B e z u g s z e i c h e n l i s t e

- 1: Fräsrad
- 2: Achse
- 3: feststehender Teil des Schutzgehäuses
- 4: erster beweglicher Teil des Schutzgehäuses
- 5: zweiter beweglicher Teil des Schutzgehäuses
- 6: Schwenkarm
- 7: Schwenkachse des Schwenkarms
- 8: Angriffspunkt des Hydraulikzylinders 28
- 9: Kraftrichtung auf den Angriffspunkt 8
- 10: Pfeil
- 11: Schulter an 4
- 12: Schulter an 5
- 13: Pfeil
- 14: Schulter
- 15: Pfeil
- 20: Fahrgestell
- 21: Bedienpult
- 22: Kontakteinheit
- 23: Hydraulikzylinder
- 24: weiterer Hydraulikzylinder
- 25: Maschinenarm
- 26: Hydraulikzylinder
- 27: Schutzgehäuse
- 28: Hydraulikzylinder

## Patentansprüche

1. Gerät zur Bearbeitung eines Bodenbereiches, insbesondere Baumstubbenfräse, mit einem angetriebenen Fräsrad, welches teilweise von einem Schutzgehäuse umgeben ist,
**dadurch gekennzeichnet,**
**dass** das Fräsrad (1) durch eine Anhebeeinrichtung anhebbar und
von dem Schutzgehäuse (27) vollständig umschließbar ist, und
**dass** bei Nichtbetätigen einer räumlich vom Fräsrad (1) getrennten Kontakteinheit (22) ein Kontakt unterbrochen wird und
eine Steuereinrichtung das Anheben und vollständige Umschließen des Fräsrads (1) durch Kraftmittel (24, 26, 28) auslöst.

2. Gerät nach Anspruch 1,
**dadurch gekennzeichnet,**
**dass** das Schutzgehäuse (3, 4, 5) mehrere, insbesondere zwei, ineinander verschiebbare Teilgehäuse (4, 5) umfasst.

3. Gerät nach Anspruch 1,
**dadurch gekennzeichnet,**
**dass** die Anhebeeinrichtung hydraulisch angetrieben wird.

4. Gerät nach Anspruch 1,
**dadurch gekennzeichnet,**
**dass** das Schutzgehäuse (4, 5) hydraulisch bewegbar ist.

5. Gerät nach Anspruch 1,
**dadurch gekennzeichnet,**
**dass** die Steuereinrichtung erst bei Betätigung der Kontakteinheit das Schutzgehäuse (3, 4, 5) öffnet.

6. Gerät nach Anspruch 1,
**dadurch gekennzeichnet,**
**dass** die Größe der Öffnung des Schutzgehäuses im Betrieb einstellbar ist.

7. Gerät nach Anspruch 1,
**dadurch gekennzeichnet,**
**dass** das Fräsrad (1) einen Antrieb mit einer, insbesondere elektrisch, ansteuerbaren, insbesondere einer hydraulischen, Kupplung aufweist und eine Steuereinrichtung vorgesehen ist, die bei Arbeitsunterbrechung die Kupplung trennt.
